# EUROPÄISCHE PATENTSCHRIFT

(11) **EP 2 312 714 B1**
(45) Veröffentlichungstag und Bekanntmachung des Hinweises auf die Patenterteilung: **06.04.2016**
(21) Anmeldenummer: 10179986.4
(22) Anmeldetag: 27.09.2010
(51) Int. Cl.: H02G 3/12, H02G 3/14

(54) **Elektro-Installationsgerät mit Trägerrahmen und Wandausgleichselementen**
Electric installation device with structure frame and wall levelling elements
Appareil d'installation électrique doté d'un cadre de support et d'éléments d'égalisation de paroi

(30) Priorität: 17.10.2009 DE 102009049711
(43) Veröffentlichungstag der Anmeldung: 20.04.2011
(73) Patentinhaber: ABB AG, 68309 Mannheim (DE)
(72) Erfinder: Schrage, Ortwin, 47906, Kempen (DE); Lisson, Werner, 58093, Hagen (DE); Schulte-Lippern, Günter, 58513, Lüdenscheid (DE); Schneider, Martin, 42499, Hückeswagen (DE); Wiese, Michael, 42897, Remscheid (DE)

(56) Entgegenhaltungen:
- GB-A- 102 404
- GB-A- 519 413

## Beschreibung

Die Erfindung betrifft ein Elektro-Installationsgerät mit mindestens einem in einer handelsüblichen UP-Gerätedose montierbaren Basisgerät, welches über einen Trägerrahmen mit mindestens einem Bedien- oder Funktionselement verbindbar ist, wobei der Trägerrahmen Öffnungen für den Eingriff von Wandausgleichelementen aufweist, welche eine sich zwischen Unterkante des Trägerrahmens und Wand einstellende Spaltbreite ausgleicht.

Aus der GB 102404 ist ein Installationsgerät mit Wandausgleichsschrauben bekannt.

Aus der DE 10 2007 051 781 B3 ist ein Installationsgerät mit Trägerrahmen bekannt, welcher Öffnungen zur Montage an einer Wand aufweist, wobei Wandausgleichselemente vorgesehen sind, welche einen Distanzblock besitzen, dessen Stärke der sich zwischen Unterkante des Trägerrahmens und Wand einstellenden Spaltbreite angepasst ist. Der Trägerrahmen weist Öffnungen für den Eingriff der Wandausgleichselemente auf, wobei das Öffnungsprofil der Öffnungen dem Querschnittsprofil des Distanzblocks angepasst ist. Ein Wandausgleichselement besteht aus einem Schraubkopf, einem sich anschließenden Hals und dem sich anschließenden Distanzblock.

Dabei müssen Wandausgleichselemente mit Distanzblöcken unterschiedlicher Stärke, beispielsweise 0,5 mm / 1,00 mm / 1,5 mm / 2,00 mm gefertigt und am Montageort zur Verfügung gehalten werden, was selbstverständlich einen gewissen Aufwand erfordert, beispielsweise bei der Lagerhaltung.

Der Erfindung liegt die Aufgabe zugrunde, ein Elektro-Installationsgerät mit Trägerrahmen anzugeben, welches auch bei nicht exakt ebener Wand problemlos installierbar ist, wobei kein Aufwand bei der Lagerhaltung von einzusetzenden Wandausgleichelementen entstehen soll.

Diese Aufgabe wird in Verbindung mit den Merkmalen des Oberbegriffes des Anspruchs 1 erfindungsgemäß dadurch gelöst, dass zumindest in den vier Eckbereichen durchgängig von der Frontfläche bis zu der Rückfläche des Trägerahmens Gewindebohrungen zum Einschrauben von Wandausgleichselementen eingebracht sind, wobei Letztere jeweils ein diesen Gewindebohrungen entsprechendes Außengewinde und eine von der Frontfläche her zugängliche Werkzeug-Eingriffsfläche für das Eindrehen / Herausdrehen dieser Wandausgleichselemente aufweisen.

Die mit der Erfindung erzielbaren Vorteile liegen insbesondere darin, dass ein teilweises hohles Aufliegen des Elektro-Installationsgerätes an einer unebenen Wand sicher verhindert wird, indem durch entsprechendes Hereindrehen oder Herausschrauben einzelner Wandausgleichselemente das Elektro-Installationsgerät entsprechend der Wandgestaltung ausgerichtet werden kann. Dabei erfolgt die Einstellung der Wandausgleichselemente direkt an der Frontseite des Installationsgerätes respektive seines Trägerrahmens. Die Ausrichtung / Einstellung der Wandausgleichselemente erfolgt stufenlos. Da die Wandausgleichselemente im Trägerrahmen "vormontiert" sind, müssen keine separaten Bauteile für einen eventuellen Wandausgleich bevorratet und bei Montage des Installationsgerätes zur Verfügung gestellt werden.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: einen seitlichen Schnitt durch einen Trägerrahmen mit verstellbaren Wandausgleichselementen,
- Fig. 2: eine perspektivische Sicht auf die Rückfläche eines Trägerrahmens,
- Fig. 3: eine perspektivische Sicht auf die Frontfläche eines drei Bedien- oder Funktionselemente aufnehmenden Trägerrahmens,
- Fig. 4: einen seitlichen Schnitt durch ein aus einem Trägerrahmen und mindestens einem Bedien- oder Funktionselement gebildetes Elektro-Installationsgerät.

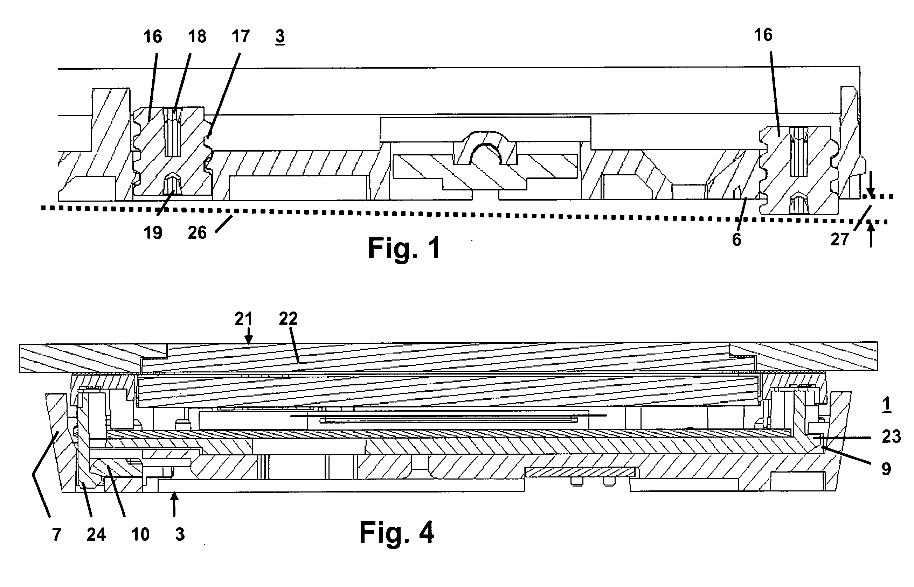

In Fig. 4 ist ein seitlicher Schnitt durch ein aus einem Trägerrahmen und mindestens einem Bedien- oder Funktionselement gebildetes Elektro-Installationsgerät dargestellt. Bei dem an einer Wand montierbaren Elektro-Installationsgerät 1 handelt es sich vorzugsweise um ein elektronisches Installationsgerät, d. h. um eine Sensoreinheit (Bedieneinheit für Stellvorgänge, Eingabegerät, Tastsensoreinheit) eines Installationsbusses der Gebäudesystemtechnik oder um eine Sensoreinheit zum direkten Steuern/Schalten einer Last (Gebiet der konventionellen Installationstechnik). Dabei kann der Trägerrahmen 3 mehrere Bedienelemente oder Funktionselemente 21 - wie z. B. Einfach-Taster, Mehrfach-Taster, Drehelement, Dreh-Drückelement, Joystick, Touchscreen, Lautsprecher, Mikrofon - aufweisen, welche auf mindestens einen (nicht dargestellten) Unterputz(UP)-Einsatz (= Basiseinheit bzw. Basisgerät) wirken. Mit diesem UP-Einsatz können entweder Lasten direkt (konventionelle Installationstechnik) oder über einen Bus (Gebäudesystemtechnik) gesteuert werden.

Das Trägerrahmenkonzept bietet auch die Möglichkeit, mehrere UP-Einsätze miteinander zu kombinieren. In der konventionellen Installationstechnik ist damit z. B. die Kombination von verschiedenen UP-Geräten - z. B. Dimmer, Schalter oder Jalousieschalter - realisierbar. In der Gebäudesystemtechnik können damit neben einem UP-Busankoppler auch zusätzliche UP-Aktoren über den Trägerrahmen bzw. über im Trägerrahmen integrierte Bauelemente angesteuert werden, welche direkt Lasten schalten oder dimmen können.

Der Trägerrahmen 3 hat quasi die Funktion eines Verbindungselementes zwischen einem in einer handelsüblichen UP-Gerätedose montierten Basisgerät und dem mindestens einen Bedien- oder Funktionselement 21 und wird an einer Wand montiert. Die Befestigung des Bedien- oder Funktionselementes 21 am Trägerahmen 3 erfolgt, indem eine Nase 23 des Bedien- oder Funktionselementes 21 in einen Hinterschnitt 9 des Trägerrahmens 3 eingreift sowie ein Rasthaken 24 des Bedien- oder Funktionselementes 21 und ein federbelastetes Verriegelungselement 10 des Trägerrahmens 3 arretierend ineinander greifen.

Fig. 4 zeigt des Weiteren eine Stirnwand 7 des Trägerahmens 3, welche den zwischen Trägerrahmen 3 und Bedien- oder Funktionselement 21 gebildeten Innenraum umschließt. Spezifische Bedieneinheiten oder Funktionseinheiten sind in einer Frontfläche 22 des Bedien- oder Funktionselementes 21 eingebaut / vorgesehen.

In Fig. 1 ist ein seitlicher Schnitt durch einen Trägerrahmen mit verstellbaren Wandausgleichselementen dargestellt. Wie zu erkennen ist, bildet sich auf Grund einer Wandunebenheit bei Montage des Trägerrahmens 3 an einer Wand 26 ein Spalt 27 zwischen Rückfläche 6 des Trägerrahmens 3 und der Wand 26 aus. Zum Ausgleich derartiger sich aufgrund von Wandunebenheiten ausbildender Spalte 27 ist der Trägerahmen 3 mit mehreren Wandausgleichelementen 16 bestückt, welche zylinderförmig ausgebildet sind, mantelseitig mit einem Außengewinde 17 versehen sind und an ihren beiden Stirnflächen jeweils Werkzeug-Eingriffsflächen 18, 19 aufweisen, wobei die Werkzeug-Eingriffsfläche 18 von der Frontfläche des Trägerrahmens 3 her und die Werkzeug-Eingriffsfläche 19 von der Rückfläche 6 des Trägerrahmens 3 her zugänglich ist.

Die Werkzeug-Eingriffsflächen 18, 19 sind dabei beispielsweise derart ausgebildet, dass ein Schlitzschraubendreher oder ein Kreuzschlitzschraubendreher oder ein Sechskantschraubendreher (mit Außen- oder Innensechskantkopf respektive Inbus) oder ein Torx-Schraubendreher als Hilfswerkzeug verwendbar ist. Ein besonderer Vorteil der vorgeschlagenen Wandausgleichselemente 16 ist darin zu sehen, dass ein stufenloser Spaltausgleich durch entsprechende Drehung der Wanddausgleichelemente 16 erfolgen kann.

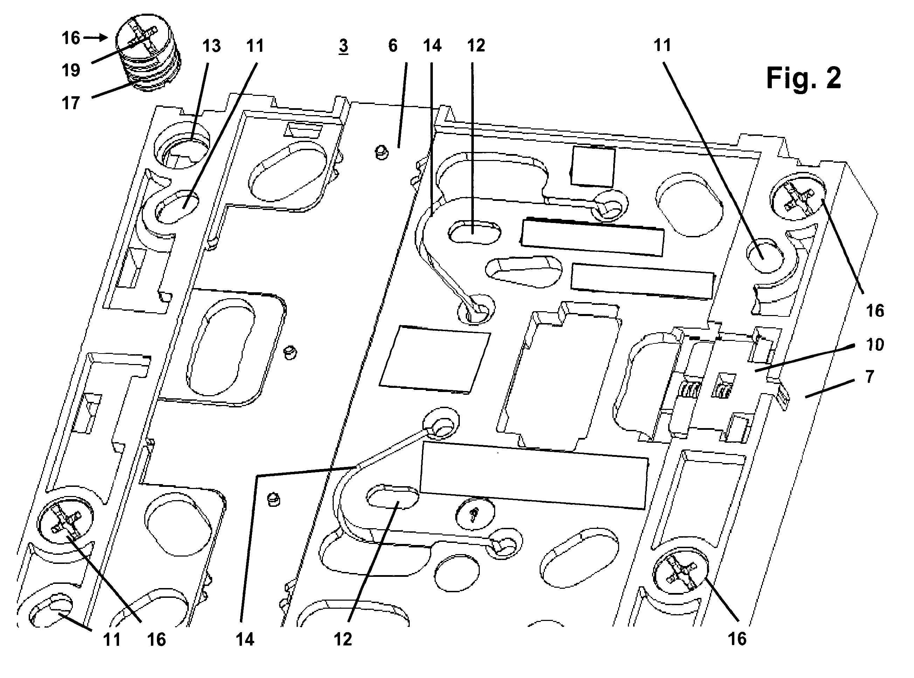

In Fig. 2 ist eine perspektivische Sicht auf die Rückfläche 6 eines Trägerrahmens 3 dargestellt, wobei ein Feld eines beispielsweise drei Felder aufweisenden Trägerrahmens 3 gezeigt ist. Unter der "Rückfläche 6" wird die bei Montage des Trägerrahmens 3 der Wand 26 zugewandte Fläche des Trägerrahmens 3 verstanden. Es sind vier Wandausgleichselemente 16 zu erkennen, welche jeweils in an den vier Ecken des Feldes angeordneten Gewindebohrungen 13 des Trägerrahmens einzuschrauben sind. Bei einem der Wandausgleichselemente 16 sind das Außengewinde 17 und die Werkzeug-Eingriffsfläche 19 bezeichnet.

In der Nähe einer jeden Ecke des Feldes ist des Weiteren eine Öffnung 11 angeordnet, welche für eine direkte Wandverschraubung des Trägerrahmens 3 an der Wand 26 geeignet ist, wozu beispielsweise Montageschrauben durch diese Öffnungen 11 in Dübel eingreifen, welche in der Wand 26 eingelassen sind. Zwei weitere Öffnungen 12 dienen zur Verschraubung des Trägerrahmens 3 an einem UP-Einsatz (Basisgerät), wozu Montageschrauben durch diese Öffnungen in Gewindebohrungen einer UP-Gerätedose eingreifen. Dabei ist abschnittsweise um die beiden Öffnungen 12 jeweils ein Freischnitt 14 in den Trägerrahmen 3 eingebracht. Die Enden dieser Freischnitte 14 münden jeweils in Bohrungen, deren Durchmesser größer als die Breites eines Freischnittes 14 ist.

Durch diese Freischnitte 14 wird verhindert, dass sich bei Unebenheiten der Wand 26 oder bei nicht eben in der Wand 26 eingelassener UP-Gerätedose und gleichzeitig starkem Anziehen des Trägerrahmens 3 an die UP-Gerätedose eine Durchbiegung des Trägerrahmens 3 einstellt, zumindest wird eine derartige Durchbiegung stark reduziert. Es stellt sich lediglich eine Abbiegung der durch die Einschnitte 14 gebildeten relativ kleinen Teilabschnitte des Trägerrahmens gegenüber den Hauptabschnitten des Trägerrahmens ein. Die endseitigen Bohrungen der Freischnitte 14 stellen sicher, dass sich bei Abbiegung der Teilabschnitte keine Spannungsrisse im Trägerrahmen an den Enden der Freischnitte ergeben. Vorteilhaft kann der Trägerrahmen 3 sehr steif ausgebildet werden, da Biegespannungen durch die Freischnitte 14 aufgefangen werden.

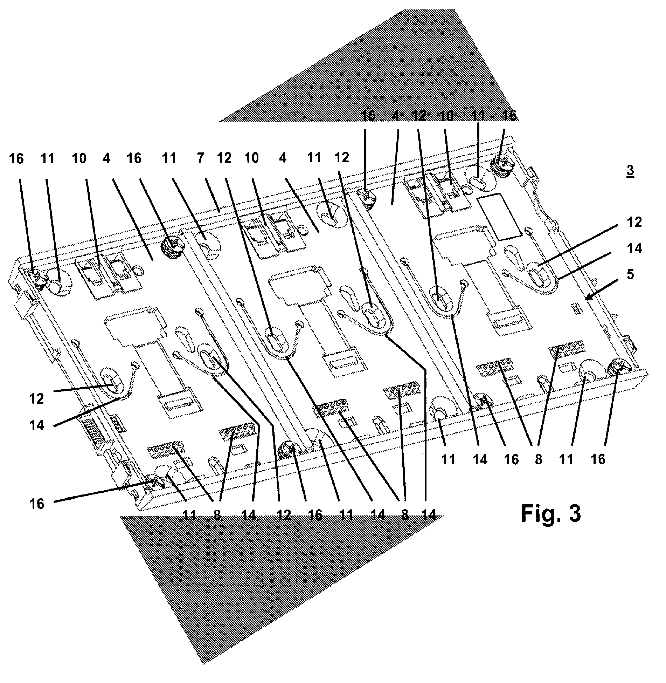

In Fig. 3 ist eine perspektivische Sicht auf die Frontfläche 5 eines drei Bedien- oder Funktionselemente aufnehmenden Trägerrahmens 3 dargestellt. Unter der "Frontfläche 5" wird die den Bedien- oder Funktionselementen zugewandte Fläche des Trägerrahmens 3 verstanden. Der Trägerrahmen 3 ist allseitig von der Stirnwand 7 umgeben. Es sind drei im Wesentlichen gleichartig ausgebildete Felder 4 für Bedien- oder Funktionsfelder zu erkennen,
- wobei die beiden äußeren Felder 4 in ihren Ecken jeweils Gewindebohrungen 13 zum Eindrehen von Wandausgleichselementen 16 aufweisen,
- wobei jedes Feld 4 zwei Öffnungen 12 für die Verschraubung an einem UP-Einsatz aufweist,
- wobei jede dieser Öffnungen 12 teilweise von einem Freischnitt 14 umgeben ist,
- wobei das mittlere Feld 4 an seinen Ecken je eine Öffnung 11 für eine direkte Wandverschraubung aufweist,
- wobei die beiden äußeren Felder 4 an ihren äußeren Ecken je eine Öffnung 11 für eine direkte Wandverschraubung aufweisen,
- wobei jedem Feld 4 ein querbewegliches Verriegelungselement 10 zur Befestigung eines Bedien- oder Funktionselementes zugeordnet ist,
- wobei jedes Feld 4 zwei Kontaktierungsstecker 8 für die elektrische Verbindung mit korrespondierenden, aufzusteckenden Kontaktierungsbuchsen der Bedien- oder Funktionselemente aufweist.

Selbstverständlich kann der Trägerrahmen 3 auch weniger oder mehr Felder 4 zur Aufnahme von weniger oder mehr Bedien- oder Funktionselemente aufweisen.

Für die Montage eines Elektro-Installationsgerätes an einer Wand 26 wird zunächst vorausgesetzt, dass mindestens eine UP-Gerätedose an gewünschter Stelle in der Wand eingebracht ist, in welche ein Basisgerät respektive UP-Einsatz zu montieren ist. Nun kann die Montage des Trägerrahmens 3 am Basisgerät respektive UP-Einsatz mittels durch die Öffnungen 12 geführter Schrauben und / oder an der Wand 26 selbst mittels durch einige der Öffnungen 11 geführter und in der Wand (beispielsweise unter Einsatz von Dübeln) verankerter Schrauben erfolgen. Wandunebenheiten zwischen der Rückfläche 6 des Trägerrahmens 3 und der Wand 26 werden durch entsprechendes Eindrehen der Wandausgleichelemente 16 in die Gewindebohrungen 13 ausgeglichen, so dass der Trägerrahmen 3 trotz sich gegebenenfalls aufgrund von Unebenheiten zwischen Rückfläche 6 und Wand 26 ausbildender Spalten 27 fest und ohne Durchbiegungen an der Wand 26 montiert ist.

Für die Montage eines Bedien- oder Funktionselementes am Trägerrahmen 3 wird zunächst der erste Abschnitt des Bedien- oder Funktionselementes in den Trägerrahmen 3 eingeschwenkt, so dass die Nase 23 unter den Hinterschnitt 9 greift. Anschließend erfolgt durch Druck auf den zweiten Abschnitt des Bedien- oder Funktionselementes eine Verrastung zwischen dem Verriegelungselement 10 und dem Rasthaken 24. Gleichzeitig wird auch die elektrische Kontaktierung zwischen den Kontaktierungssteckern 8 und den korrespondierenden Kontaktierungsbuchsen bewirkt. Für die Montage eines Bedien- oder Funktionselementes am Trägerrahmen 3 ist es von besonderer Wichtigkeit, dass der Trägerrahmen 3 auch bei Wandunebenheiten frei von Durchbiegungen an der Wand 26 montiert ist.

### Bezugszeichenliste

- 1: Elektro-Installationsgerät
- 2: -
- 3: Trägerrahmen
- 4: Feld für Bedien- oder Funktionselement
- 5: Frontfläche
- 6: Rückfläche
- 7: Stirnwand
- 8: Kontaktierungsstecker
- 9: Hinterschnitt
- 10: Verriegelungselement
- 11: Öffnung für direkte Wandverschraubung
- 12: Öffnung für Verschraubung an UP-Einsatz
- 13: Gewindebohrung zum Einschrauben eines Wandausgleichselement
- 14: Freischnitt
- 15: -
- 16: Wandausgleichselement
- 17: Außengewinde
- 18: Werkzeug-Eingriffsfläche von der Frontfläche her
- 19: Werkzeug-Eingriffsfläche von der Rückfläche her
- 20: -
- 21: Bedien- oder Funktionselement
- 22: Frontfläche mit Bedieneinheit und Funktionseinheit
- 23: Nase
- 24: Rasthaken
- 25: -
- 26: Wand
- 27: Spalt zwischen Rückfläche des Trägerrahmens und Wand

## Patentansprüche

1. Elektro-Installationsgerät (1) mit mindestens einem in einer handelsüblichen UP-Gerätedose montierbaren Basisgerät, welches über einen Trägerrahmen (3) mit mindestens einem Bedien- oder Funktionselement (21) verbindbar ist, **dadurch gekennzeichnet, dass** zumindest in den vier Eckbereichen durchgängig von der Frontfläche (6) bis zu der Rückfläche (6) des Trägerahmens (3) Gewindebohrungen (13) zum Einschrauben von Wandausgleichselementen (16) eingebracht sind, wobei Letztere jeweils ein diesen Gewindebohrungen (13) entsprechendes Außengewinde (17) und eine von der Frontfläche her zugängliche Werkzeug-Eingriffsfläche (18) für das Eindrehen / Herausdrehen dieser Wandausgleichselemente (16) aufweisen.

2. Elektro-Installationsgerät nach Anspruch 1, **dadurch gekennzeichnet, dass** die Wandausgleichselemente (16) an beiden Stirnseiten Werkzeug-Eingriffsflächen (18, 19) für das Eindrehen / Herausdrehen aufweisen.

3. Elektro-Installationsgerät nach Anspruch 1 oder 2, **dadurch gekennzeichnet, dass** zwei Öffnungen (12) zur Verschraubung des Trägerrahmens (3) am Basisgerät vorgesehen sind, wobei abschnittsweise um diese beiden Öffnungen (12) jeweils ein Freischnitt (14) in den Trägerrahmen (3) eingebracht ist, wodurch sich abbiegbare Teilabschnitte des Trägerrahmens (3) gegenüber den Hauptabschnitten des Trägerrahmens ergeben.

4. Elektro-Installationsgerät nach Anspruch 3, **dadurch gekennzeichnet, dass** durch endseitige Bohrungen in den Freischnitten (14) sichergestellt ist, dass sich bei Abbiegung der Teilabschnitte keine Spannungsrisse im Trägerrahmen (3) an den Enden der Freischnitte (14) ergeben.

## Claims

1. Electrical installation device (1) having at least one base device which can be installed in a commercially available flush-mounted device box and which can be connected to at least one operator control or functional element (21) by means of a carrier frame (3), **characterized in that** threaded holes (13) for screwing in wall levelling elements (16) are made continuously from the front face (6) to the rear face (6) of the carrier frame (3) at least in the four corner regions, wherein the said wall levelling elements each have an external thread (17) which corresponds to the said threaded holes (13) and have a tool engagement area (18), which is accessible from the front face, for screwing in/unscrewing the said wall levelling elements (16).

2. Electrical installation device according to Claim 1, **characterized in that** the wall levelling elements (16) have tool engagement areas (18, 19) for screwing in/unscrewing purposes on both end sides.

3. Electrical installation device according to Claim 1 or 2, **characterized in that** two openings (12) are provided for screwing the carrier frame (3) to the base device, wherein a clearance (14) is in each case made in the carrier frame (3) in sections around the said two openings (12), as a result of which partial sections, which can be bent, of the carrier frame (3) are produced in relation to the main sections of the carrier frame.

4. Electrical installation device according to Claim 3, **characterized in that** holes at the ends of the clearances (14) ensure that no stress cracks are produced in the carrier frame (3) at the ends of the clearances (14) when the partial sections are bent.

## Revendications

1. Appareil d'installation électrique (1) comprenant au moins un appareil de base pouvant être monté dans une boîte d'appareil encastrée usuelle dans le commerce, qui peut être connecté par le biais d'un cadre de support (3) à au moins un élément de commande ou fonctionnel (21), **caractérisé en ce qu'**au moins dans les quatre régions de coin, des alésages filetés (13) pour le vissage d'éléments d'égalisation de paroi (16) sont réalisés de manière traversante depuis la paroi frontale (6) jusqu'à la paroi arrière (6) du cadre de support (3), les éléments d'égalisation de paroi présentant à chaque fois un filetage extérieur (17) correspondant à ces alésages filetés (13) et une surface d'engagement d'outil (18) accessible depuis la surface frontale pour le vissage/dévissage de ces éléments d'égalisation de paroi (16).

2. Appareil d'installation électrique selon la revendication 1, **caractérisé en ce que** les éléments d'égalisation de paroi (16) présentent, au niveau des deux côtés frontaux, des surfaces d'engagement d'outil (18, 19) pour le vissage/dévissage.

3. Appareil d'installation électrique selon la revendication 1 ou 2, **caractérisé en ce que** deux ouvertures (12) pour le vissage du cadre de support (3) sont prévues au niveau de l'appareil de base, une découpe (14) étant réalisée dans le cadre de support (3) à chaque fois en partie autour de ces deux ouvertures (12), des sections partielles flexibles du cadre de support (3) par rapport aux sections principales du cadre de support étant ainsi obtenues.

4. Appareil d'installation électrique selon la revendication 3, **caractérisé en ce que** par des alésages réalisés du côté des extrémités dans les découpes (14), il est garanti que lors de la flexion des sections partielles, aucune fissure de contrainte ne se produise dans le cadre de support (3) au niveau des extrémités des découpes (14).
